# EUROPEAN PATENT SPECIFICATION

(11) **EP 0 857 004 B1**
(45) Date of publication and mention of the grant of the patent: **07.12.2005**
(21) Application number: 98200262.8
(22) Date of filing: 29.01.1998
(51) Int. Cl.: H04Q 11/04, H04Q 3/62

(54) **System for remote access**
System für Fernzugriff
Système pour accès à distance

(30) Priority: 04.02.1997 NL 1005178
(43) Date of publication of application: 05.08.1998
(73) Proprietor: Koninklijke KPN N.V., 9726 AE Groningen (NL)
(72) Inventor: Benchellal, Azeddine, 2264 XZ Leidschendam (NL)

(56) References cited:
- EP-A- 0 641 134
- EP-A- 0 729 256
- EP-A- 0 769 882
- WO-A-93/15583
- WO-A-97/18662
- FRANTZEN V: "TRENDS IN THE DEVELOPMENT OF PUBLIC TELECOMMUNICATION NETWORKS" COMPUTER NETWORKS AND ISDN SYSTEMS, vol. 14, 1 May 1987 (1987-05-01), pages 339-358, XP000574139
- BROSEMER J J ET AL: "VIRTUAL NETWORKS: PAST, PRESENT AND FUTURE" IEEE COMMUNICATIONS MAGAZINE, vol. 30, no. 3, 1 March 1992 (1992-03-01), pages 80-85, XP000297353
- PATENT ABSTRACTS OF JAPAN vol. 017, no. 665 (E-1472), 8 December 1993 (1993-12-08) & JP 05 219225 A (MEISEI ELECTRIC CO, LTD.), 27 August 1993 (1993-08-27)

## Description

### A. BACKGROUND OF THE INVENTION

The invention is related to a system for connecting a local user to a private network, via an ISDN.

Such a system is for example disclosed in document EP 0 729 256 A.

It is now possible to give remote users such as teleworkers access to a central network. One scenario, for example, is that customers call a company for information. To this end they call a central number of that company, whereupon the company exchange switches the call through to a local teleworker. The latter, provided with an ISDN-connection, then maintains contact with the customer via one of the ISDN B channels, while simultaneously data are exchanged with the company database via the ISDN D channel and the X.25 network, making use of the PMBS (Packet Mode Bearer Service) of the ISDN.

The need makes itself felt to give teleworkers access to the company network which, in contrast to that in the abovementioned scenario, is completely equipollent to the access possible within the company environment. For the remote user it should make no difference whatsoever whether he or she makes use of the telecommunication facilities at the office or at home. Thus the call costs for business use must be borne not by the remote user but by the company. The same internal telephone numbers must also be usable as within the company.

### B. SUMMARY OF THE INVENTION

The invention is based on the insight that the ISDN PMBS lends itself superbly for the transmission of, for example, QSIG signals which are normally only used for signalling within modern company exchanges (PBXs). According to the invention, such control signals are transmitted to and from the remote user by means of the PMBS of the ISDN through which the remote user is connected to the PBX network. Via the PMBS, a remote user can use the same (short) internal telephone numbers as at a work site within the company. PBX services such as *21, follow-me, call-me-back, etc. can also be used in the same way as within the company. Moreover, the costs of communication can be charged entirely to the company.

It is observed that a similar solution for a similar problem is suggested in an earlier application, EP96202329. The problem posed there is slightly different, however, namely the coupling of separate PBXs via the ISDN. By making use of the PMBS, PBX users do not notice it if they are connected to different PBXs, and they can use the same value-added services as users who are connected to the same PBX. The present problem lies somewhat different. It must now be prevented, namely, that the remote user - connected directly to the ISDN - must pay communication costs, and a provision must be made through which, in the case of calls to extensions within the PBX network, use can be made of internal numbers (for example 23134 instead of 07033 23134).

In order to realise the first system requirement, that of avoiding connection costs by the remote user, the remote user establishes connection with the PBX via the PMBS. At the PMBS it is possible to charge the costs for setting up the PMBS connection to the called party, in this case the PBX. Data or voice transmission can subsequently take place via a normal ISDN connection (B channel) between the PBX and the remote user for whom the call is initiated by the PBX. If, for business reasons, the remote user wishes to effect an off-net call, that is, a call to outside the PBX - without having to pay for said call - a QSIG code is sent to the PBX to that end via the PMBS, which subsequently initiates the desired off-net call as well as a connection with the remote user.

The second system requirement, that of the remote user being able to use internal numbers, is also realised by the PBX detecting whether a number dialled by the remote user is an internal number (for example having five digits) or an external number (having ten digits). Apart from that, this is also detected in calls initiated by internal users who are connected directly (that is, not via the PMBS) to the PBX.

### C. EXAMPLES OF EMBODIMENT

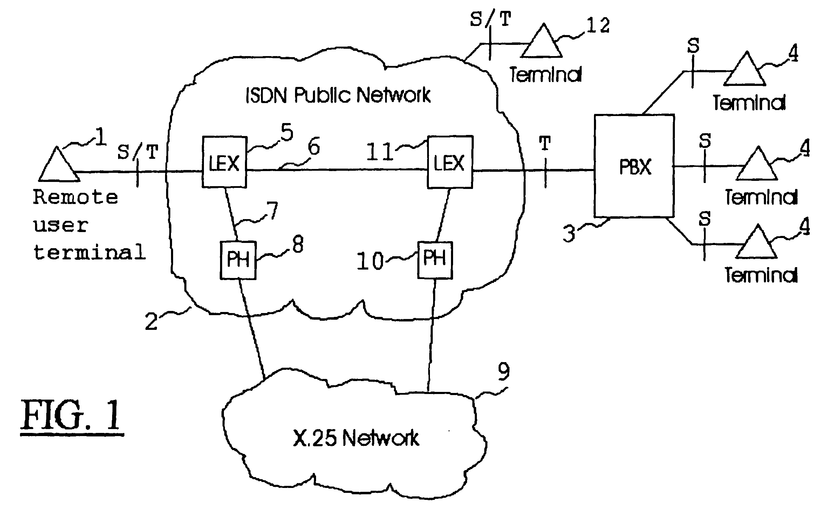

FIG. 1 diagrammatically shows an implementation of the system according to the invention. A remote user 1, a teleworker, is connected to an ISDN 2. Besides a subscription for the standard ISDN service, the user also has a subscription for the PMBS. Via an S and a T interface (ISDN 2 and 30 respectively), the user can establish a connection with the company network via PBX 3 of the company for which he/she works. A large number of internal terminals 4 (telephone sets, etc.) is also connected to said PBX 3. If the remote user wishes to call one of his/her colleagues, the ISDN terminal 1, making use of the PMBS, establishes a connection with a local exchange (LEX) 5 of the ISDN. A connection is established, in conformance with the PMBS, via the signalling channel (D channel), from said terminal 1, via said LEX 5, a packet handler (PH) 8, the X.25 network 9, a PH 11 and an LEX 10, to the PBX 3. Via this route, QSIG signals, signals for the (internal) control of the PBX, can be exchanged with the remote user's terminal. Via the PMBS route, the remote terminal 1 is regarded by the PBX as a fully fledged "internal" terminal, even though it is physically located outside the PBX. From the moment the remote terminal, via the PMBS route, has reported itself as an "internal" terminal, the terminal also has all the facilities which the other, physically internal terminals 4 have.

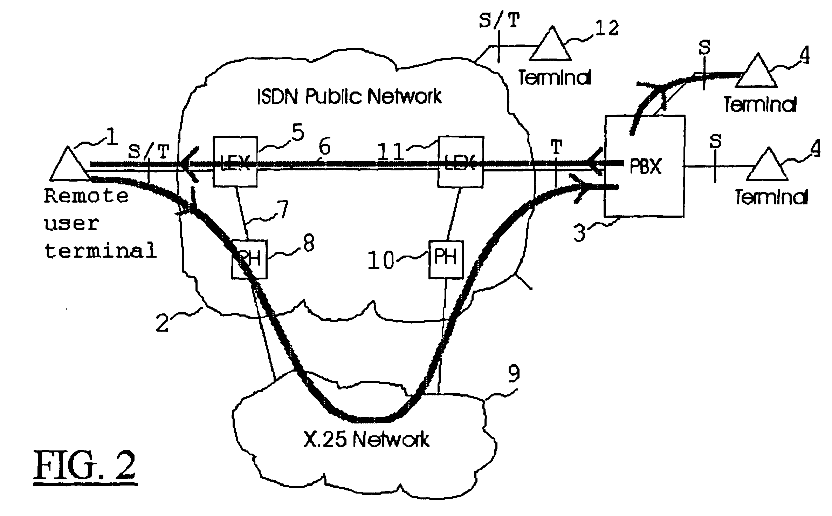

If the remote terminal wishes to call another internal terminal 4 (on-net call), terminal 1 can suffice by sending the (abbreviated) internal number. Via the QSIG protocol (of which an example is given in the application mentioned earlier, and which application therefore, insofar that is necessary, is deemed to be incorporated in this application) a connection is established on the one hand with the desired terminal 4 and with said terminal 1 on the other hand. The connection of said PBX 3 to the remote terminal 1 is in this regard a normal ISDN connection via a B channel. Since the latter is requested by the PBX 3, however, the connection costs are charged to the PBX, that is, to the company for which the remote user works. The connection is thus requested at the PBX by means of QSIG signalling, via the D channel and the X.25 network (in conformance with the PMBS) by the remote user, who subsequently establishes two connections: one external connection via the ISDN B channel to said remote user 1, and one connection to said internal terminal 4. FIG. 2 illustrates this.

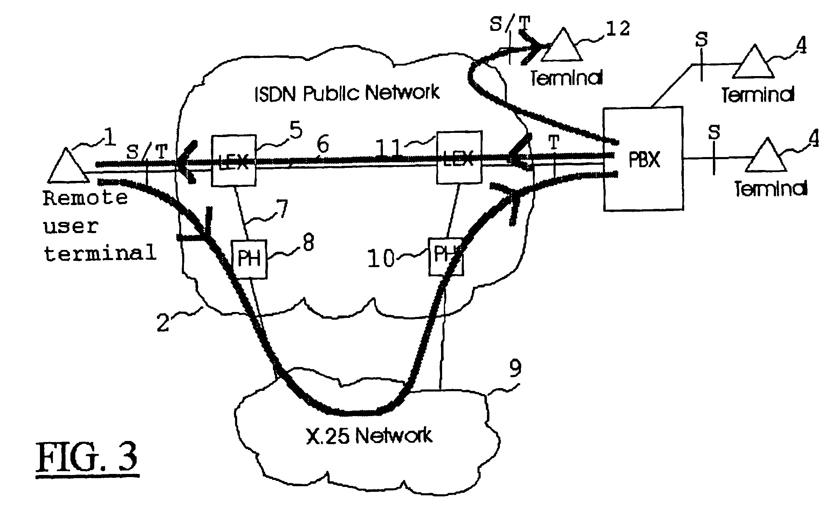

If the remote user wishes to establish a connection with a terminal 12 outside the PBX (off-net call), then that request is also transmitted to the PBX by means of the PMBS. The PBX recognises the requested number (for example 07033 23134) as an external number and initiates a connection with said external number 12 on the one hand, and a connection, via the ISDN B channel, to said remote user 1 on the other hand. In that case, too, since both connections are initiated by the PBX, the costs for the connection between the PBX and said external number 12, as well as the costs for the connection between the PBX and said remote user 1, are charged to the PBX. This situation is illustrated in FIG. 3.

The remote user can also be called from outside the PBX network, via the PBX. In that case, the PBX is dialled, and this connects the call through to the remote user, making use of the QSIG signalling by means of the PMBS via the ISDN D channel and X.25, as though his/her terminal were an internal PBX terminal. Switching services etc. are also realised in the same way, by means of QSIG over PMBS.

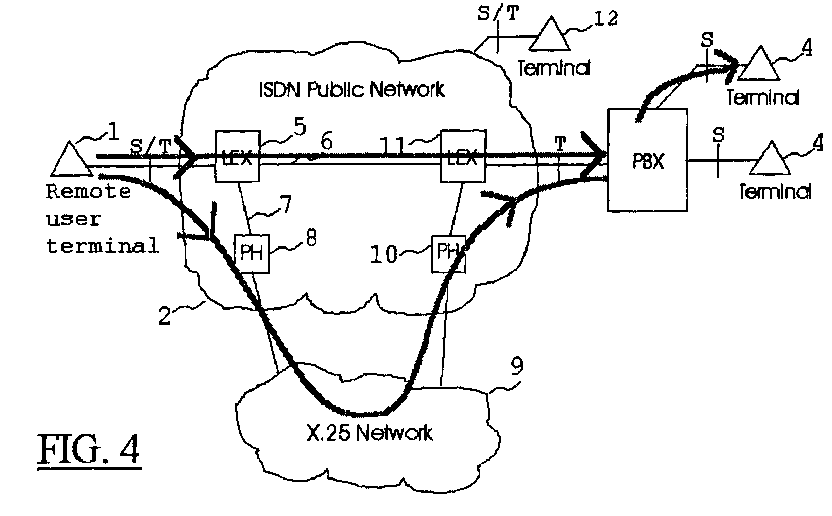

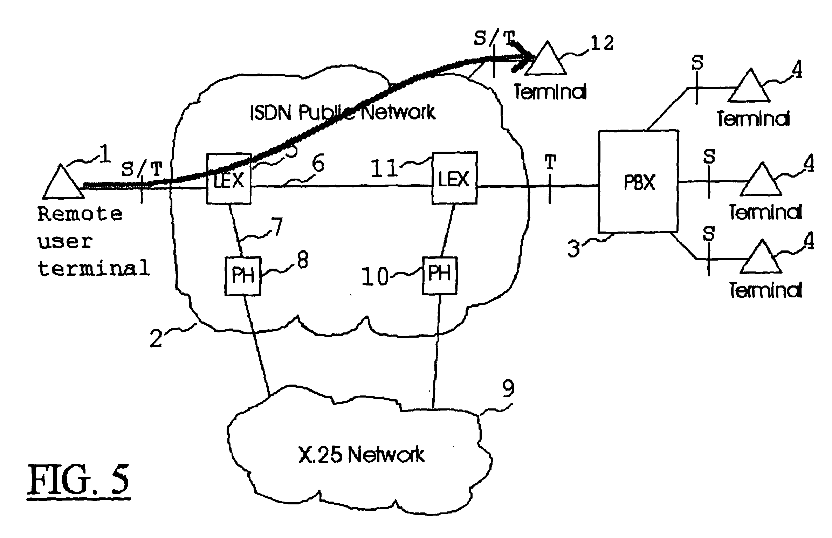

Finally it is observed that, although it was assumed in the above that the costs are always to be borne by the PBX, it is, of course, always possible to let the connection costs be borne by the remote user. In particular, that will be the case if the remote user wants to establish a private connection with a subscriber connected to the ISDN or (via a gateway) the PSTN. Under certain circumstances, however, it could also be desirable that a remote user can indeed make use of the possibility described above, albeit, however, not at the cost of the PBX but at his own cost. This is illustrated in FIG. 4. In this situation (on-net call), said remote user 1 establishes a data connection with the PBX via the PMBS (in this case at the cost of the remote user, however), and also a connection via the ISDN B channel. Both are initiated in this case by the remote user, who therefore also bears the connection costs. For the rest, the remote user can indeed - via QSIG exchange via ISDN PMBS - function as a fully fledged PBX terminal, including options such as dialling of (short) internal numbers, follow-me, *21, etc. FIG. 5, finally, shows for the sake of completeness a (private) connection between said remote user 1 and an external terminal 12 (off-net call), at the cost of the remote user. The PBX is completely excluded here.

It is further observed that, although QSIG is a frequently applied signalling protocol nowadays, the invention is, of course, not restricted to this protocol. The main thing is that the PBX functionality is, as it were, extended to remote users by making use of the PMBS, whereby the PBX signalling messages between the remote user and the PBX - although only intended for internal PBX use - can be exchanged, so that the remote user has the same possibilities as an internal terminal connected to the PBX network directly.

### D. REFERENCES

EP96202329, 21-08-1996 in the name of KONINKLIJKE PTT NEDERLAND NV.

## Claims

1. System for connecting, via an ISDN (2), a remote user (1) with a private network (3) in such a way that the call costs for calls made by the remote user can be borne by the operator of the private network and the remote user can use the same internal telephone numbers and the same services as at a work site within the private network (3), **characterised in that** the connection, being an ISDN connection via a B channel, in response to a request by the remote user (1), is set up by the private network (3), to which end signalling messages are exchanged between the remote user and the private network making use of the PMBS of the ISDN (2) via a D channel and the existing X.25 network, the private network connecting the remote user with a terminal within or outside the private network.

## Patentansprüche

1. Vorrichtung, um einen Fernbenutzer (1) über ein ISDN (2) mit einem privaten Netzwerk (3) in einer Weise zu verbinden, dass die Anrufkosten für Anrufe, welche vom Fernbenutzer getätigt werden, durch den Betreiber des privaten Netzwerkes getragen werden können und der Fernbenutzer die gleichen internen Telefonnummern und die gleichen Dienste wie an einer Arbeitsstelle im privaten Netzwerk (3) verwenden kann, **dadurch gekennzeichnet, dass** die Verbindung, die eine ISDN-Verbindung über einen B-Kanal ist, in Reaktion auf eine Anfrage durch den Fernbenutzer (1), durch das private Netzwerk (3) hergestellt wird, zu welchem Zweck Signalisier-Nachrichten zwischen dem Fernbenutzer und dem privaten Netzwerk ausgetauscht werden, wobei der PMBS des ISDN (Z) über einen D-Kanal und das bestehende X.25 Netzwerk verwendet wird, und wobei das private Netzwerk den Fernbenutzer mit einem Endgerät innerhalb oder ausserhalb des privaten Netzwerkes verbindet.

## Revendications

1. Système pour connecter, par l'intermédiaire d'un RNIS (2), un utilisateur extérieur (1) à un réseau privé (3) d'une manière telle que les coûts d'appel pour des appels passés par l'utilisateur extérieur puissent être supportés par l'opérateur du réseau privé, et que l'utilisateur extérieur puisse utiliser les mêmes numéros de téléphone internes et les mêmes services que sur un lieu de travail à l'intérieur du réseau privé (3), **caractérisé en ce que** le connexion, à savoir une connexion RNIS réalisée par l'intermédiaire d'un canal B, en réponse à une demande de l'utilisateur extérieur (1), est établie par le réseau privé (3), dans le but que des messages de transmission de signaux soient échangés entre l'utilisateur extérieur et le réseau privé en utilisant le PMBS du RNIS (2) par l'intermédiaire d'un canal D et du réseau X.25 existant, le réseau privé connectant l'utilisateur extérieur à un terminal à l'intérieur ou à l'extérieur du réseau privé.
